# EUROPEAN PATENT APPLICATION

(11) **EP 2 641 769 A1**
(43) Date of publication of application: **25.09.2013**
(21) Application number: 11842338.3
(22) Date of filing: 10.11.2011
(51) Int. Cl.: B60K 13/04, B60K 11/04, B66F 9/075, E02F 9/18, F01N 3/02

(54) **DIESEL PARTICULATE FILTER MOUNTING STRUCTURE FOR INDUSTRIAL VEHICLE**

(30) Priority: 17.11.2010 JP 2010256862
(71) Applicant: TCM Corporation, Nishi-ku, Osaka-shi, Osaka 550-0003 (JP)
(72) Inventor: TAKATSUJI, Masahiro, Osaka-shi Osaka 550-0003 (JP)
(74) Representative: Whitlock, Holly Elizabeth Ann
(86) International application number: PCT/JP2011/076472
(87) International publication number: WO 2012/067170

(57) **Abstract**

A mounting structure is provided for facilitating attachment and detachment of a diesel particulate filter without detaching or removing a counter weight. The mounting structure is for installing the diesel particulate filter to remove particulate matter included in emission of the engine 10 of the forklift 1. The forklift 1 includes a vehicle body 2, a handling device 3 provided in front of the vehicle body 2, and a counter weight 4 provided at the rear of the vehicle body 2 and housing a diesel particulate filter 6. The diesel particulate filter 6 is detachably fitted to frames 61, 62 that are provided in the counter weight 4. The counter weight 4 has an opening 4a extending thereinto, which is sized so that the diesel particulate filter 6 can pass through the opening 4a vertically.

## Description

### TECHNICAL FIELD

The present invention relates generally to diesel particulate filter mounting structure for industrial vehicles with counter weights such as forklifts, shovel loaders and the like, and more particularly to improvements of such a mounting structure.

### BACKGROUND ART

An industrial vehicle such as a forklift and a shovel loader has a handling device for cargo handling operation at a front side part of the vehicle and a counter weight for retaining valance of the vehicle during cargo handling operation at a back side part of the vehicle. The counter weight is generally fixedly attached to a body frame with a bolt or the like. On the other hand, in an engine-type industrial vehicle, a muffler for discharging exhaust gas from an engine is housed in the counter weight.

The muffler normally does not need regular maintenance. However, when performing maintenance of the muffler and other engine peripheral components, the prior art structure requires detachment of the heavy counter weight from the body frame at the time of maintenance, which is very bothersome.

Japanese Patent Application Publication Nos. 1989-317879 and 1992-148797 disclose structure in which the counter weight is rotatably supported at the body frame horizontally or back and forth.

In such a structure, during maintenance, horizontal or backward and forward rotation of the counter weight causes the interior of the counter weight to be exposed outside. Thereby, there is no need to detach the counter weight from the body frame, thus improving maintenance.

However, in this case as well, because additional operations are required for attaching and removing a pin to engage the counter weight with the body frame and further operations are required for rotating the heavy counter weight there are certain limitations in improving maintenance.

On the other hand, industrial-vehicle manufacturers need to install diesel particulate filters as standard components in engine exhaust system for collecting particulate matter (PM) included in emissions of diesel engines and removing it from the emissions so that the industrial vehicles can adapt for the fourth emission regulation started in 2011.

Among the particulate matter, soot that is accumulated in the diesel particulate filters during use of them can be burned using exhaust gas of high temperature. However, as for ash accumulated in the diesel particulate filters, since it cannot be burned even using exhaust gas of high temperature, a removing process using another device is required after the diesel particulate filters are detached from the vehicles.

Japanese Utility Model Registration Application Publication No. 1993-89823 and Japanese Patent Application Publication No. 2004-218570 disclose structure in which the diesel particulate filter is detachably fitted to the body frame.

However, in either of the publications, the diesel particulate filter is not described relevantly to the counter weight for the industrial vehicle. The publications disclose nothing from the standpoint of the way on how to install the diesel particulate filter detachably relative to the counter weight for the industrial vehicle.

The present invention has been made in view of these circumstances and its object is to provide mounting structure that allows for easy attachment and detachment of a diesel particulate filter without detaching or removing a counter weight. In other words, the present invention is directed to improving maintenance of the diesel particulate filter.

### DISCLOSURE OF INVENTION

A mounting structure according to one aspect of the present invention is for installing a diesel particulate filter to remove particulate matter included in emission of an engine of an industrial vehicle. The industrial vehicle includes a vehicle body, a handling device provided in front of the vehicle body, and a counter weight provided at the rear of the vehicle body and housing a diesel particulate filter. The diesel particulate filter is detachably fitted to a frame that is provided at the rear of the vehicle body. The counter weight has an opening formed therethrough, which is sized so that the diesel particulate filter can pass through the opening vertically.

According to one aspect of the present invention, when performing maintenance of the diesel particulate filter, a maintenance worker has only to take the diesel particulate filter out of the vehicle utilizing the opening (i.e. through hole) formed vertically through the counter weight. Also, when putting the diesel particulate filter back into the vehicle, the maintenance worker has only to utilize the opening (i.e. through hole) formed vertically through the counter weight.

In this case, when performing maintenance of the diesel particulate filter, attachment and detachment of the diesel particulate filter become possible without detaching or removing the counter weight, thus facilitating attachment and detachment of the diesel particulate filter, thereby improving maintenance of the diesel particulate filter.

Here, if the diesel particulate filter is detachably fitted to a rotatable counter weight as shown in the above-mentioned Japanese Patent Application Publication Nos. 1989-317879 and 1992-148797, in this case as well, additional operations are required for attaching and removing a pin to engage the counter weight with the body frame and further operations are required for rotating the heavy counter weight, and as a result, there are certain limitations in improving maintenance.

The diesel particulate filter may be fastened with a screw at the frame. In this case, the diesel particulate filter is provided detachably at the frame through the screw.

The diesel particulate filter may be provided at the frame via a rubber vibration insulator.

The counter weight may have another opening formed in and extending longitudinally through a rear surface thereof and the screw may face another opening. In this case, screwing and unscrewing of the screw can be performed through another opening formed in the rear surface of the counter weight, thus improving working property at the time of maintenance.

The diesel particulate filter may be laterally biased toward either one of opposite sides at the rear of the vehicle body. In this case, in the event that an engine exhaust pipe is laterally biased toward either one of opposite sides of the vehicle body, the diesel particulate filter can be connected to such an engine exhaust pipe via the shortest route.

The opening may be disposed laterally centrally at the counter weight.

The opening may have a cover detachably fitted thereto for closing the opening, and the cover may have a muffler inserted thereinto and connected to the diesel particulate filter. In this case, when performing maintenance of the diesel particulate filter, by removing the cover provided at the opening of the counter weight, attachment and detachment of the diesel particulate filter can be facilitated through the opening.

The cover may have a rib formed on an inner surface of the cover for introducing air flow. In this case, by utilizing the rib formed on the inner surface of the cover, air flow can be rectified to be introduced toward the rear of the diesel particulate filter.

The cover may act as a rear shroud for introducing engine cooling air flow toward the rear of the vehicle. In this case, by utilizing the rib formed on the inner surface of the cover, engine cooling air flow can be introduced toward the rear of the vehicle.

The industrial vehicle may be a forklift or a shovel loader.

As above-mentioned, according to one aspect of the present invention, when performing maintenance of the diesel particulate filter, a maintenance worker has only to take the diesel particulate filter out of the vehicle using the opening formed vertically through the counter weight and also when putting the diesel particulate filter back into the vehicle, the maintenance worker has only to use the opening formed vertically through the counter weight. By so doing, when performing maintenance of the diesel particulate filter, attachment and detachment of the diesel particulate filter can be facilitated without detaching or removing the counter weight, thus improving maintenance of the diesel particulate filter.

### BRIEF DESCRIPTION OF DRAWINGS

FIG. 1 is a side schematic view of a forklift employing a diesel particulate filter mounting structure according to an embodiment of the present invention;
Fig. 2 is a top plan schematic view of a counter weight of the forklift of FIG. 1, illustrating a cover fitted to an upper opening of the counter weight;
FIG. 3 is a top plan schematic view of the counter weight of FIG. 2 showing the state in which the cover is removed;
Fig. 4 is a perspective schematic view of the diesel particulate filter and its peripheral components that are received in the counter weight of FIG. 2;
Fig. 5 is a front elevational view of the diesel particulate filter and its peripheral components of FIG. 4 seen from the rear side of the vehicle;
FIG. 6 is a schematic longitudinal sectional view of the diesel particulate filter and its peripheral components of FIG. 4;
FIG. 7 is a schematic illustrating operations for attachment and detachment of the diesel particulate filter of FIG. 4;
FIG. 8 is a perspective schematic view showing a variant of the cover of FIG. 2;
FIG. 9A is a top plan view of the cover of FIG. 8; and
FIG. 9B is a front elevational view of the cover of FIG. 8.

### BEST MODE FOR CARRYING OUT THE INVENTION

Embodiments of the present invention will be hereinafter described in accordance with the appended drawings.

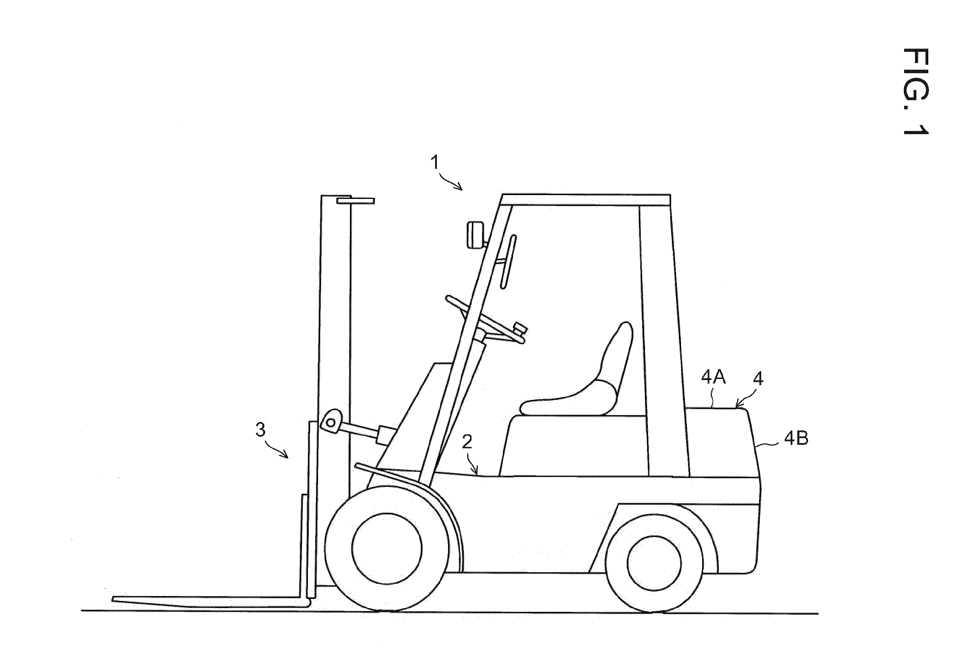

FIGS. 1 to 7 illustrate a diesel particulate filter mounting structure according to an embodiment of the present invention. Here, a forklift or a forklift truck is taken as an example of an industrial vehicle.

As shown in FIG. 1, a forklift 1 includes a vehicle body 2, a handling device 3 such as a fork provided in front of the vehicle body 2, and a counter weight 4 provided at the rear of the vehicle body 2.

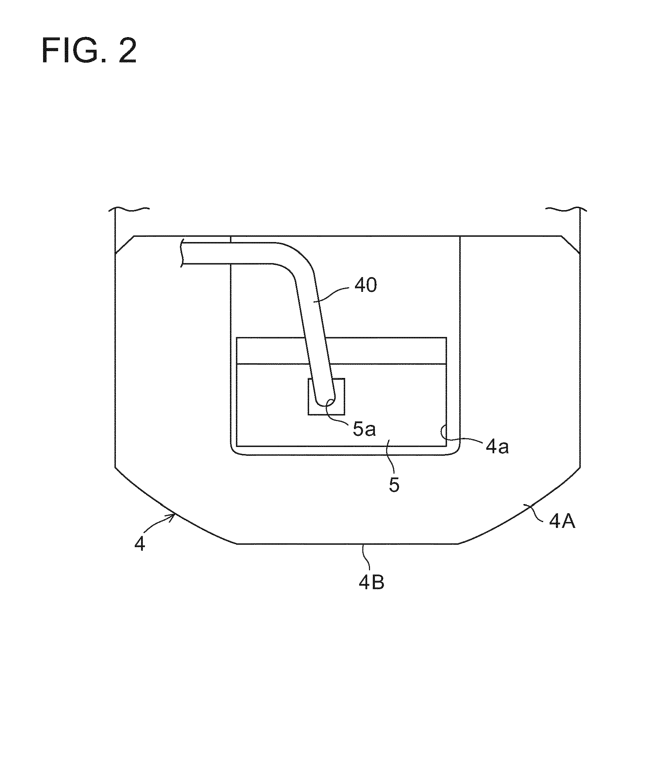

The counter weight 4 has, as shown in FIG. 2, an opening 4a that is formed in and extends through an upper panel 4A of the counter weight 4 and that is centrally disposed in a lateral direction (i.e. in the left to right direction of FIG. 2) of the upper panel 4A. The opening 4a has a cover 5 detachably fitted thereto via a screw or the like for closing the opening 4a. The cover 5 has a through hole 5a formed therein. A muffler 40 is inserted into the through hole 5a and extends upwardly.

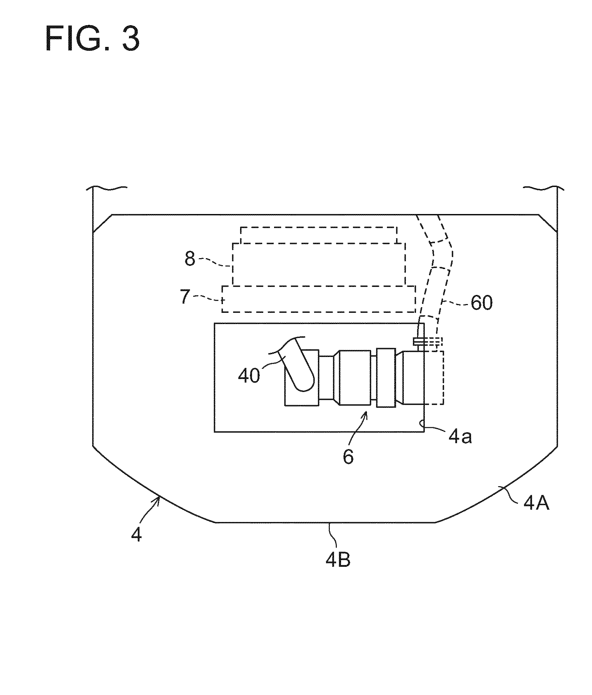

As shown in FIG. 3, there is provided a diesel particulate filter 6 in the counter weight 4. The diesel particulate filter 6 is for collecting and removing particulate matter (PM) included in emission of a diesel engine. An exhaust gas intake side of the diesel particulate filter 6 is connected to an exhaust pipe 60 extending from an engine 10 and an exhaust gas outlet side of the diesel particulate filter 6 is connected to an end of the muffler 40. The opening 4a of the counter weight 4 is sized so that the diesel particulate filter 6 can pass through the opening 4a vertically. The diesel particulate filter 6 is laterally biased toward either one (in this case, to the right side) of opposite sides of the vehicle. Thereby, the diesel particulate filter 6 is laterally offset relative to the opening 4a of the counter weight 4.

In FIG. 3, a reference numeral 7 depicts a radiator and the radiator 7 holds cooling water for cooling the engine. A reference numeral 8 depicts a fan shroud and the fan shroud 8 is an air introduction device that introduces airflow generated by a fan toward the radiator 7 to cool the radiator 7.

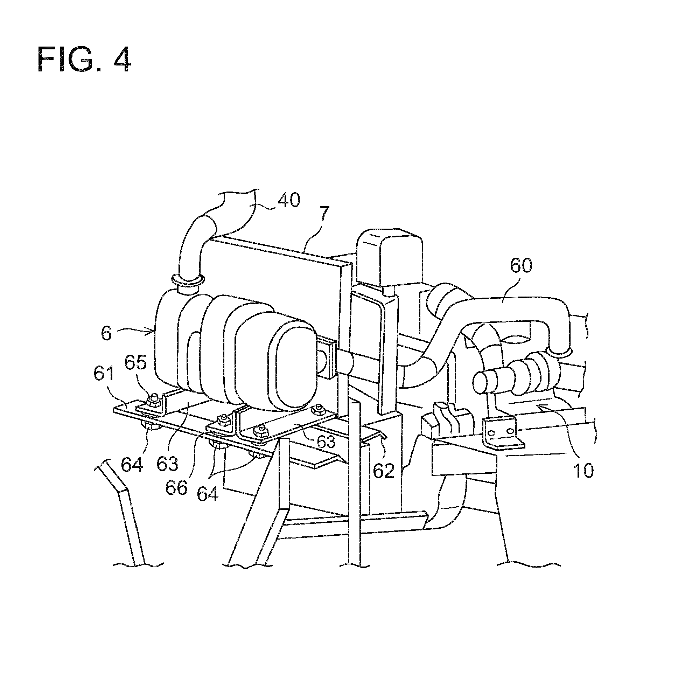

The diesel particulate filter 6 is, as shown in FIG. 4, disposed at the rear of the engine 10 and connected with the exhaust pipe 60 extending from the engine 10. In this embodiment, the exhaust pipe 60 of the engine 10 extends from the right side of the engine 10 and the diesel particulate filter 6 is laterally biased to the right side of the vehicle as mentioned above. Therefore, piping between the diesel particulate filter 6 and the engine 10 can be performed by the shortest route.

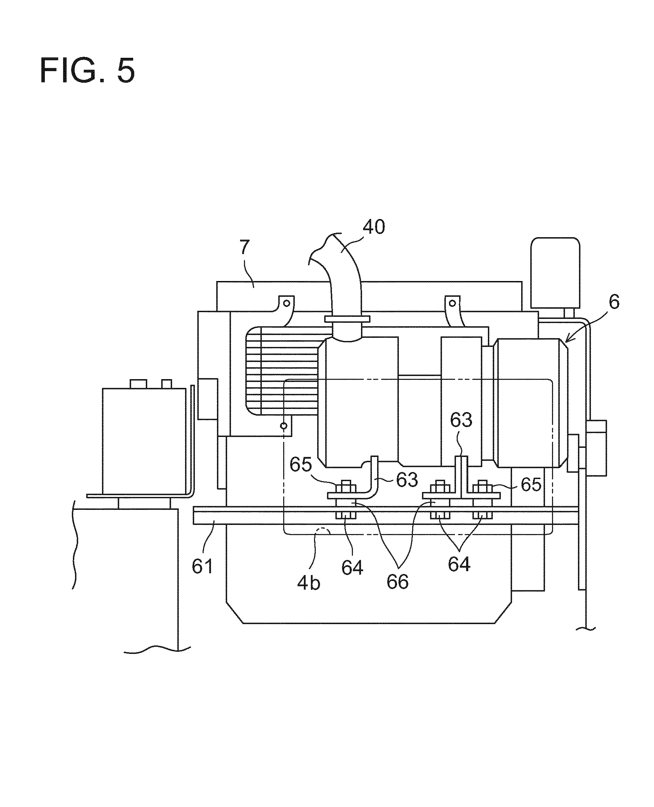

The diesel particulate filter 6 is provided on frames 61, 62. The frames 61, 62 are, as shown in FIG. 5, formed of a pair of base plates each extending in a width direction of the vehicle (i.e. in a left to right direction of FIG. 5). The frames 61, 62 are longitudinally spaced away from each other at a predetermined spacing in a forward and rearward direction of the vehicle or in a direction perpendicular to the page of FIG. 5(see FIG. 4).

The diesel particulate filter 6 is installed on the frames 61, 62 through fittings 63 such as angle plates. An upper portion of the fitting 63 is fixed to a bottom portion of the diesel particulate filter 6 and a lower portion of the fitting 63 is fixedly attached to the frames 61, 62 with a screw 64. In FIGS. 4 and 5, a reference numeral 65 denotes a nut that is screwed into the screw 64. The screw 64 may be fixed to the frames 61, 62 in welding or the like so as not to fall off at the time of attachment and detachment of the diesel particulate filter 6. The fitting 63 may have an elongated aperture formed therein for insertion of the screw 64 in order to facilitate positioning of the diesel particulate filter 6 at the time of attachment of the diesel particulate filter 6. FIGS. 4 and 5 show an example in which three pieces of angle plates are provided as fittings 63, but number of the angle plates may be two or more than four.

There is provided a rubber vibration insulator 66 around the screw 64 between the fitting 63 and the frame 61 or 62. Through mounting of the diesel particulate filter 6 on the rubber vibration insulator 66, vibration during driving of the vehicle is prevented from being directly transmitted to the diesel particulate filter 6. However, such a rubber vibration insulator 66 is not an essential member.

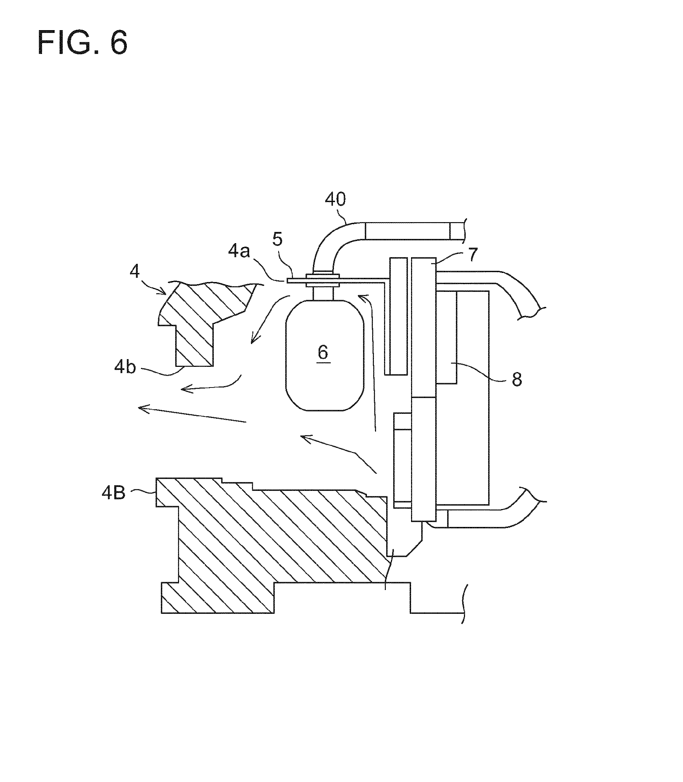

The counter weight 4 has an opening 4b formed in and extending longitudinally through a rear panel 4B thereof (see FIG. 6). The screws 64 and the nuts 65 face the opening 4b (see a double dotted line of FIG. 5).

Next, maintenance work of the diesel particulate filter 6 will be explained hereinafter.

At the time of maintenance, a worker opens the cover 5 that closes the opening 4a of the upper panel 4A of the counter weight 4, and removes the cover 4 from the opening 4a. Then, the diesel particulate filter 6 is exposed through the opening 4a (see FIG. 3). From this state, the worker removes the exhaust pipe 60 that is connected to the diesel particulate filter 6 and unscrews the nuts 65 to remove them. Some of the nuts 65 can be removed through the opening 4b of the rear panel 4B of the counter weight 4 before opening the cover 5 (see FIG. 5).

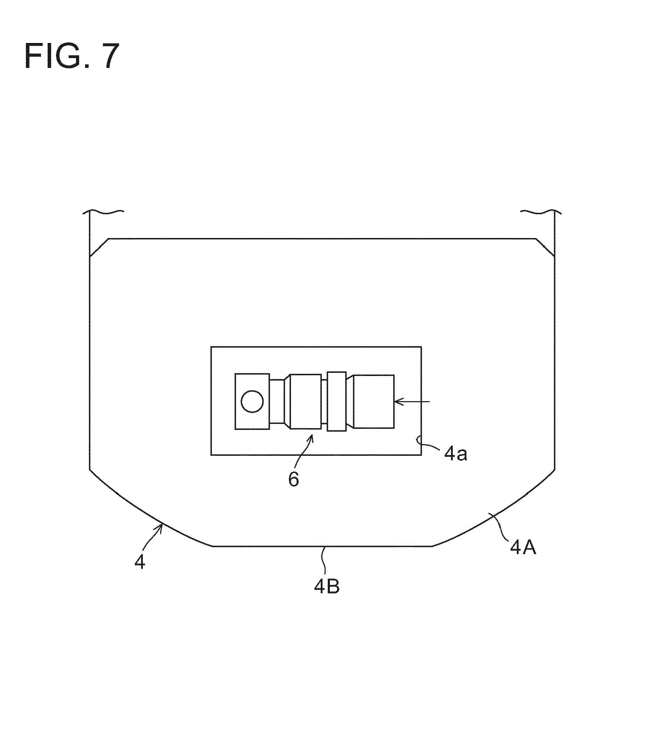

Then, the diesel particulate filter 6 is lifted at a short distance using a crane or the like, and thus the fittings 63 at the bottom portion of the diesel particulate filter 6 are pulled out of the threaded portion of the screws 64. From this state, the diesel particulate filter 6 is transferred at a short distance toward the left side of the vehicle (see FIG. 7) to be located directly below or right under the opening 4a. Next, the diesel particulate filter 6 is lifted upwardly out of the vehicle through the opening 4a and placed down on the ground. The worker eliminates of ash or the like that has been accumulated in the diesel particulate filter 6 and exchange a filter of the diesel particulate filter 6.

Thereafter, the diesel particulate filter 6 is lifted again using a crane or the like and introduced into the counter weight 4 through the opening 4a of the upper panel 4A of the counter weight 4. The diesel particulate filter 6 is then transferred at a short distance toward the right side of the vehicle to align the positions of apertures of the fittings 63 with the positions of the thread portions of the screws 64. Then, the diesel particulate filter 6 is lowered downwardly and thus the thread portions of the screws 64 are inserted into the apertures of the fittings 63. The nuts 65 are fitted to the thread portions of the screws 64 to be tightened. Then, the exhaust pipe 60 is fitted to the diesel particulate filter 6 and the cover 5 is returned to the opening 4a. In such a manner, the maintenance work of the diesel particulate filter 6 is completed.

According to such an embodiment of the present invention, when performing maintenance of the diesel particulate filter 6, a maintenance worker has only to take the diesel particulate filter 6 out of the vehicle utilizing the opening 4a formed vertically through the counter weight 4. Similarly, when putting the diesel particulate filter 6 back into the vehicle, the worker has only to utilize the opening 4a formed vertically through the counter weight 4. In this way, during maintenance of the diesel particulate filter 6, attachment and detachment of the diesel particulate filter 6 can be facilitated without detaching or removing the counter weight 4. As a result of this, maintenance of the diesel particulate filter 6 can be improved.

Moreover, in the mounting structure of the diesel particulate filter 6 according to an embodiment of the present invention, since the muffler 40 connected to the diesel particulate filter 6 is disposed above the counter weight 4, maintenance of the muffler 40 and its peripheral components can be also facilitated.

Also, as shown in FIG. 6, as the muffler 40 is disposed above the counter weight 4, there is formed an inner space below the diesel particulate filter 6 in the counter weight 4. The outside air introduced from the front portion of the vehicle can flow toward the rear portion of the vehicle through such an inner space (see an arrow mark in FIG. 6) and the air can flow out of the vehicle through the opening 4b of the rear panel 4B of the counter weight 4.

At this time, it is possible for the outside air to pass through another inner space formed above the diesel particulate filter 6 in the counter weight 4, but in order to achieve such an air flow effectively the cover 5 may have a rib formed on an inside surface of the cover 5 to introduce the air.

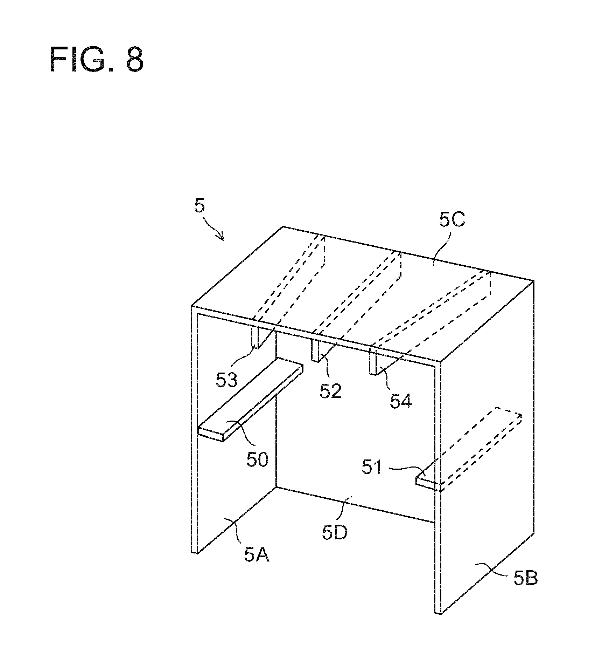

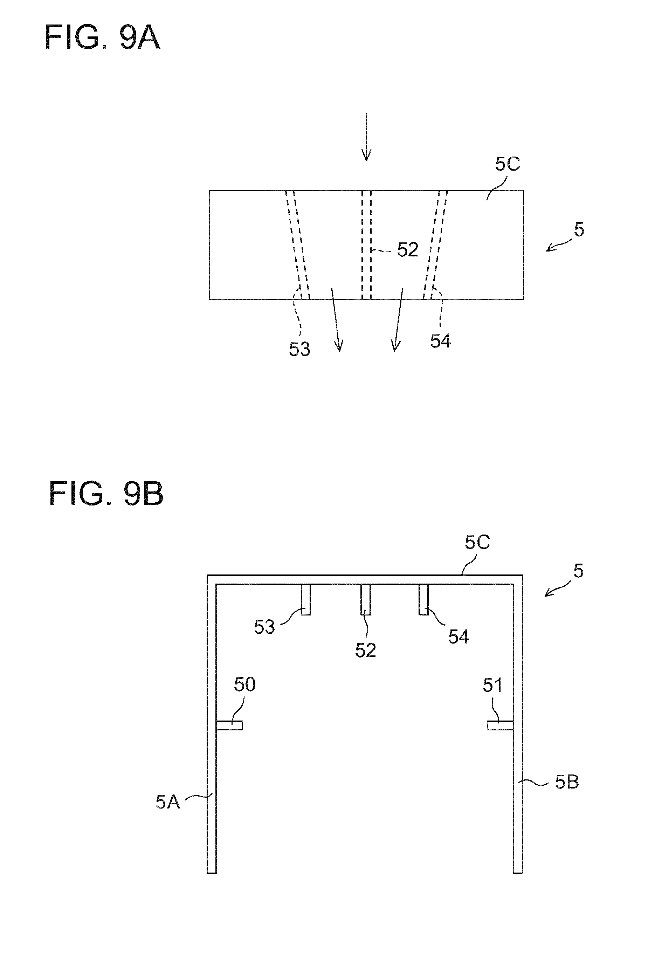

FIGS. 8, 9A, and 9B illustrate a variant of the cover 5 with such a rib. As shown in these drawings, the cover 5 is formed of a pair of side plates 5A, 5B, a top plate 5C, and a back plate 5D. A front surface and a bottom surface of the cover 5 are openings. The cover 5 is installed in the counter weight 4 with the back plate 5D facing toward the engine side (i.e. to the front side of the vehicle) (see FIG. 6).

The side plates 5A, 5B of the cover 5 are provided with plate-like ribs (or air rectifying plates) 50, 51 respectively that each extend in the longitudinal direction of the vehicle (i.e. the direction perpendicular to the page of FIG. 9A). The top plate 5C of the cover 5 is provided with three plate-like ribs (or air rectifying plates) 52, 53, 54 that are placed at a predetermined spacing and that extend substantially in the longitudinal direction of the vehicle. The centrally placed rib 52 extends along the longitudinal direction of the vehicle. The ribs 53, 54 placed on opposite sides of the centrally placed rib 52 approach the rib 52 gradually or incline inwardly toward the rib 52 (see FIGS. 8 and 9A) as it go toward the rear side of the vehicle (i.e. the bottom side of FIG. 9A). Such an arrangement allows for the outside air introduced from the front part of the vehicle to be rectified and forwarded toward the rear part of the vehicle (see arrow marks of FIG. 9A). In this case, the cover 5 functions as a rear shroud that can rectify engine cooling air flow and forward the air flow toward the rear part of the vehicle.

In the above-mentioned embodiment, the diesel particulate filter mounting structure according to an aspect of the present invention was applied to a forklift, but the present invention also has application to other industrial vehicles such as a shovel loader and the like.

### INDUSTRIAL APPLICABILITY

The present invention is suitable to industrial vehicles equipped with counter weights such as forklifts, shovel loaders and the like.

## Claims

1. A mounting structure for installing a diesel particulate filter to remove particulate matter included in emission of an engine of an industrial vehicle,
the industrial vehicle including a vehicle body, a handling device provided in front of the vehicle body, and a counter weight provided at the rear of the vehicle body and housing the diesel particulate filter,
the particulate filter being detachably fitted to a frame that is provided at the rear of the vehicle body, and the counter weight having an opening formed therein and extending therethrough, which is sized so that the diesel particulate filter can pass through the opening vertically.

2. The mounting structure according to claim 1, wherein the diesel particulate filter is fastened with a screw at the frame.

3. The mounting structure according to claim 1 or 2, wherein the diesel particulate filter is provided at the frame via a rubber vibration insulator.

4. The mounting structure according to claim 2, wherein the counter weight has another opening formed in and extending through a rear surface thereof, the screw facing the another opening.

5. The mounting structure according to claim 1, wherein the diesel particulate filter is laterally biased toward either one of opposite sides of the vehicle body.

6. The mounting structure according to claim 1, wherein the opening is disposed laterally centrally at the counter weight.

7. The mounting structure according to claim 1, wherein the opening has a cover detachably fitted thereto for closing the opening, the cover having a muffler fitted therethrough, the muffler being connected to the diesel particulate filter.

8. The mounting structure according to claim 7, wherein the cover has a rib formed on an inner surface of the cover for introducing air flow.

9. The mounting structure according to claim 8, wherein the cover acts as a rear shroud for introducing engine cooling air flow toward the rear of the vehicle.

10. The mounting structure according to claim 1, wherein the industrial vehicle is a forklift or a shovel loader.
